# EUROPEAN PATENT APPLICATION

(11) **EP 4 535 896 A1**
(43) Date of publication of application: **09.04.2025**
(21) Application number: 23815013.0
(22) Date of filing: 23.05.2023
(51) Int. Cl.: H04W 72/04, H04L 5/00, H04W 52/00

(54) **CARRIER AGGREGATION CONTROL METHOD AND APPARATUS, TERMINAL AND NETWORK-SIDE DEVICE**

(30) Priority: 30.05.2022 CN 202210599156
(71) Applicant: Vivo Mobile Communication Co., Ltd., Dongguan, Guangdong 523863 (CN)
(72) Inventor: MAO, Yuanze, Dongguan, Guangdong 523863 (CN)
(74) Representative: Lavoix
(86) International application number: PCT/CN2023/095729
(87) International publication number: WO 2023/231829

(57) **Abstract**

This application discloses a carrier aggregation control method and apparatus, a terminal, and a network-side equipment, and pertains to the field of communications technologies. A carrier aggregation control method applied to a terminal includes: receiving a first message delivered by a network-side equipment; reporting corresponding carrier aggregation association information to the network-side equipment based on a service state of the terminal, where the carrier aggregation association information indicates whether the network-side equipment configures a secondary cell of carrier aggregation for the terminal; and in response to a second message delivered by the network-side equipment based on the carrier aggregation association information, activating the secondary cell in a case that the network-side equipment configures the secondary cell of carrier aggregation for the terminal, and deactivating the secondary cell or maintaining a closed state of carrier aggregation in a case that the network-side equipment does not configure the secondary cell of carrier aggregation for the terminal.

## Description

### CROSS-REFERENCE TO RELATED APPLICATIONS

This application claims priority to Chinese Patent Application No. 202210599156.0 filed in China on May 30, 2022, which is incorporated herein by reference in its entirety.

### TECHNICAL FIELD

This application belongs to the field of communications technologies, and specifically, to a carrier aggregation control method and apparatus, a terminal, and a network-side equipment.

### BACKGROUND

Carrier aggregation may be used to aggregate a plurality of consecutive or inconsecutive carriers into a larger bandwidth. When whole network resources are not fully occupied, a utilization rate of the whole network resources may be greatly improved, and peak rate experience of a user may be improved. In addition, carrier aggregation may improve a utilization rate of discrete spectrum. However, while bringing benefits, carrier aggregation may also bring some corresponding defects, such as an increase of power consumption of a terminal, a waste of network resources caused by a fact that some terminals are equipped with carrier aggregation, but there is no corresponding service request, and the like.

### SUMMARY

Embodiments of this application aim to provide a carrier aggregation control method and apparatus, a terminal, and a network-side equipment, to solve a related-technology problem that due to carrier aggregation, power consumption of a terminal increases, and network resources are occupied inefficiently, resulting in waste.

According to a first aspect, an embodiment of this application provides a carrier aggregation control method, applied to a terminal and including:
receiving a first message delivered by a network-side equipment;
reporting corresponding carrier aggregation association information to the network-side equipment based on a service state of the terminal, where the carrier aggregation association information indicates whether the network-side equipment configures a secondary cell of carrier aggregation for the terminal; and
in response to a second message delivered by the network-side equipment based on the carrier aggregation association information, activating the secondary cell in a case that the network-side equipment configures the secondary cell of carrier aggregation for the terminal, and deactivating the secondary cell or maintaining a closed state of carrier aggregation in a case that the network-side equipment does not configure the secondary cell of carrier aggregation for the terminal.

According to a second aspect, an embodiment of this application provides a carrier aggregation control method, applied to a network-side equipment and including:
delivering a first message to a terminal;
receiving carrier aggregation association information reported by the terminal in response to the first message, where the carrier aggregation association information is generated by the terminal based on a service state of the terminal, and the carrier aggregation association information indicates whether the network-side equipment configures a secondary cell of carrier aggregation for the terminal; and
determining, based on the carrier aggregation association information, whether to configure the secondary cell of carrier aggregation for the terminal.

According to a third aspect, an embodiment of this application provides a carrier aggregation control apparatus, applied to a terminal and including:
a first receiving module, configured to receive a first message delivered by a network-side equipment;
a reporting module, configured to report corresponding carrier aggregation association information to the network-side equipment based on a service state of the terminal, where the carrier aggregation association information indicates whether the network-side equipment configures a secondary cell of carrier aggregation for the terminal; and
an activation processing module, configured to: in response to a second message delivered by the network-side equipment based on the carrier aggregation association information, activate the secondary cell in a case that the network-side equipment configures the secondary cell of carrier aggregation for the terminal, and deactivate the secondary cell or maintain a closed state of carrier aggregation in a case that the network-side equipment does not configure the secondary cell of carrier aggregation for the terminal.

According to a fourth aspect, an embodiment of this application provides a carrier aggregation control apparatus, applied to a network-side equipment and including:
a delivering module, configured to deliver a first message to a terminal;
a second receiving module, configured to receive carrier aggregation association information reported by the terminal in response to the first message, where the carrier aggregation association information is generated by the terminal based on a service state of the terminal, and the carrier aggregation association information indicates whether the network-side equipment configures a secondary cell of carrier aggregation for the terminal; and
a configuration processing module, configured to determine, based on the carrier aggregation association information, whether to configure the secondary cell of carrier aggregation for the terminal.

According to a fifth aspect, an embodiment of this application provides a terminal. The terminal includes a processor and a memory, the memory stores a program or instructions executable on the processor, and the program or the instructions are executed by the processor to implement the steps of the method according to the first aspect.

According to a sixth aspect, an embodiment of this application provides a network-side equipment, including a processor and a memory, the memory stores a program or instructions executable on the processor, and when the program or the instructions are executed by the processor, the steps of the method according to the second aspect are implemented.

According to a seventh aspect, an embodiment of this application provides a readable storage medium, where the readable storage medium stores a program or instructions, and when the program or the instructions are executed by a processor, the steps according to the first aspect are implemented, or when the program or the instructions are executed by the processor, the steps according to the second aspect are implemented.

According to an eighth aspect, an embodiment of this application provides a chip. The chip includes a processor and a communications interface, the communications interface is coupled to the processor, and the processor is configured to run a program or instructions, to implement the method according to the first aspect or the method according to the second aspect.

According to a ninth aspect, an embodiment of this application provides a computer program product, where the program product is stored in a storage medium, and the program product is executed by at least one processor to implement the method according to the first aspect, or the program product is executed by at least one processor to implement the method according to the second aspect.

In the embodiments of this application, the service state of the terminal is obtained after the first message delivered by the network-side equipment is received, and the corresponding carrier aggregation association information is reported to the network-side equipment based on the service state, to indicate whether the network-side equipment configures the secondary cell of carrier aggregation for the terminal, so that carrier aggregation is configured for the terminal only when the terminal actually needs to be configured with carrier aggregation. Consequently, a problem of power consumption and network occupation caused by configuring carrier aggregation when carrier aggregation is not needed may be avoided, user experience is improved, and more network resources may be saved for other terminals to use, thereby improving overall adaptability of a network.

### BRIEF DESCRIPTION OF THE DRAWINGS

FIG. 1 is a schematic diagram of a wireless communications system according to an embodiment of this application;
FIG. 2 is a schematic flowchart of a carrier aggregation control method applied to a terminal according to an embodiment of this application;
FIG. 3 is a schematic flowchart of a carrier aggregation control method applied to a network-side equipment according to an embodiment of this application;
FIG. 4 is a schematic diagram of a structure of a carrier aggregation control apparatus applied to a terminal according to an embodiment of this application;
FIG. 5 is a schematic diagram of a structure of a terminal according to an embodiment of this application;
FIG. 6 is a schematic diagram of a hardware structure of a terminal according to an embodiment of this application;
FIG. 7 is a schematic diagram of a structure of a carrier aggregation control apparatus applied to a network-side equipment according to an embodiment of this application; and
FIG. 8 is a schematic diagram of a structure of a network-side equipment according to an embodiment of this application.

### DETAILED DESCRIPTION

The following clearly describes the technical solutions in the embodiments of this application with reference to the accompanying drawings in the embodiments of this application. Apparently, the described embodiments are some but not all of the embodiments of this application. All other embodiments obtained by a person of ordinary skill in the art based on the embodiments of this application shall fall within the protection scope of this application.

The terms "first", "second", and the like in this specification and claims of this application are used to distinguish between similar objects instead of describing a specific order or sequence. It should be understood that, the terms used in such a way are interchangeable in proper circumstances, so that the embodiments of this application can be implemented in an order other than the order illustrated or described herein. Objects classified by "first", "second", and the like are usually of a same type, and the number of objects is not limited. For example, there may be one or more first objects. In addition, in this specification and the claims, "and/or" represents at least one of connected objects, and a character "/" usually indicates that associated objects are in an "or" relationship.

It should be noted that technologies described in the embodiments of this application are not limited to a Long Time Evolution (Long Time Evolution, LTE)/LTE-Advanced (LTE-Advanced, LTE-A) system, and may further be applied to other wireless communication systems such as Code Division Multiple Access (Code Division Multiple Access, CDMA), Time Division Multiple Access (Time Division Multiple Access, TDMA), Frequency Division Multiple Access (Frequency Division Multiple Access, FDMA), Orthogonal Frequency Division Multiple Access (Orthogonal Frequency Division Multiple Access, OFDMA), single-carrier frequency division multiple access (Single-carrier Frequency Division Multiple Access, SC-FDMA), and other systems. The terms "system" and "network" in the embodiments of this application may be used interchangeably. The described technologies can be applied to both the systems and the radio technologies mentioned above as well as to other systems and radio technologies. The following descriptions describe a new radio (New Radio, NR) system for example purposes, and NR terms are used in most of the following descriptions, but these technologies can also be applied to an application other than an NR system application, for example, a 6th generation (6th Generation, 6G) communications system.

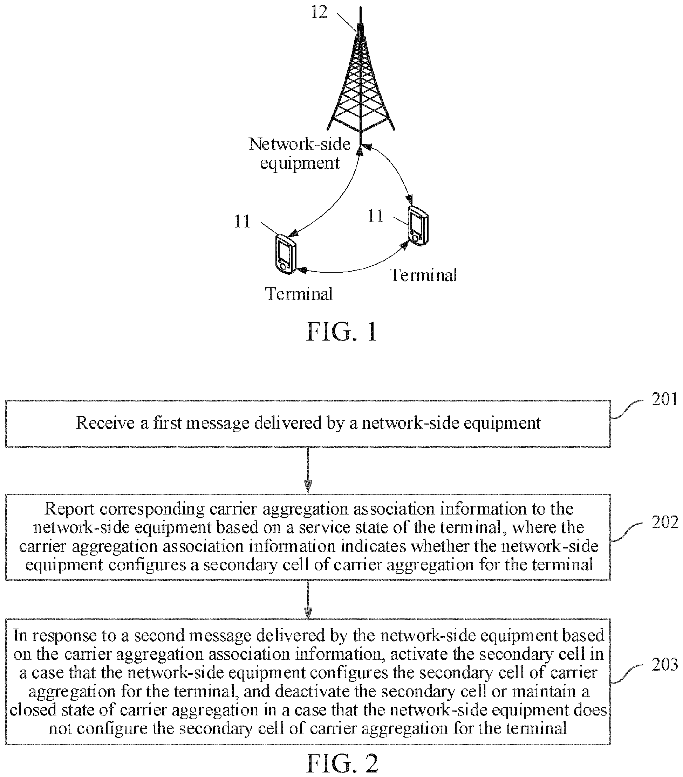

FIG. 1 is a block diagram of a wireless communications system to which embodiments of this application can be applied. The wireless communication system includes a terminal 11 and a network-side equipment 12. The terminal 11 may be a terminal side device such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), vehicle user equipment (Vehicle User Equipment, VUE), pedestrian user equipment (Pedestrian User Equipment, PUE), smart household (household devices with wireless communication functions, such as a refrigerator, a television, a washing machine, or furniture), a game console, a personal computer (Personal Computer, PC), a teller machine, or a self-service machine, and the wearable device includes a smart watch, a smart band, smart earphones, smart glasses, smart jewelry (a smart bracelet, a smart hand chain, a smart ring, a smart necklace, a smart bangle, a smart anklet, or the like), a smart wristband, smart clothes, and the like. It should be noted that, a specific type of the terminal 11 is not limited in the embodiments of this application. The network-side equipment 12 may include an access network device or a core network device. The access network device may also be referred to as a radio access network device, a radio access network (Radio Access Network, RAN), a radio access network function, or a radio access network unit. The access network device may include a base station, a wireless local area network (Wireless Local Area Network, WLAN) access node, a Wi-Fi node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmitting receiving point (Transmitting Receiving Point, TRP), or another appropriate term in the art. As long as a same technical effect is achieved, the base station is not limited to a specified technical term. It should be noted that, a specific type of the base station is not limited in the embodiments of this application.

A Long-Term Evolution Advance (Long-Term Evolution Advance, LTE-Advance or LTE-A for short) system is a technical evolution of 3rd generation partnership project (3rd Generation Partnership Project, 3GPP for short) based on LTE with a purpose of meeting a requirement of an International Mobile Telecommunication Advance (International Mobile Telecommunication Advance, IMT-Advance for short) system, which supports backward compatibility with the LTE system. ITU IMT-Advanced requires that a maximum bandwidth of a system should not be less than 40 MHz. Considering a spectrum allocation mode and planning in the related technology, it is difficult to find a whole band that may carry a bandwidth of the IMT-Advanced system. Based on the above consideration, LTE-Advanced puts forward a concept of carrier aggregation (Carrier Aggregation, CA for short) with a fundamental purpose of aggregating a plurality of relatively narrow-band carriers into a wider spectrum, that is, aggregating a plurality of component carriers (Component Carrier, CC), and improving a peak rate and a system capacity of the terminal, to meet an increasing network rate requirement of the terminal. When a terminal of LTE-A establishes a radio resource control (Radio Resource Control, RRC for short) connection for the first time, only one serving cell, namely, a primary cell (Primary Cell, Pcell for short) is configured, and a plurality of additional serving cells, namely, secondary cells (Secondary Cell, Scell for short) are configured based on considerations such as a load or quality of service (Quality of Service, QoS for short) requirement and a capability of the terminal. Compared with a single carrier network terminal, a terminal in a CA radio frequency operation mode needs to be built with more radio frequency transceiver circuits and a more complicated modulation and demodulation procedure, which may generate greater power consumption and shorten a use time of a terminal battery when the terminal operates.

With reference to the accompanying drawings, the following describes in detail a carrier aggregation control method and apparatus, a terminal, and a network-side equipment in the embodiments of this application based on specific embodiments and application scenarios thereof.

Referring to FIG. 2, FIG. 2 is a schematic flowchart of a carrier aggregation control method applied to a terminal according to an embodiment of this application. As shown in FIG. 2, an embodiment of this application provides a carrier aggregation control method applied to a terminal, and the method includes the following steps.

Step 201: Receive a first message delivered by a network-side equipment.

In some embodiments of this application, the terminal selects a cell to access, completes a network attachment process, and establishes an initial connection. In this case, a serving cell on which the terminal currently camps is a primary cell (Pcell), and after the connection is established, the terminal may interact with the network-side equipment.

When the terminal completes network attachment of the primary cell, the network-side equipment may deliver the first message, and if the terminal receives the first message delivered by the network-side equipment, the terminal obtains a service state of the terminal in response to the message. In this embodiment, the service state of the terminal may represent a type and importance of the service currently performed by the terminal, for example, whether the service currently performed is a network service or a non-network service, and whether the network service currently performed is an important network service or a non-important network service. Consequently, it may be determined based on the service state of the terminal whether the terminal needs a carrier aggregation function in this case. For example, when the important network service is performed, if the terminal needs to ensure a good network condition, carrier aggregation needs to be performed to provide a large bandwidth and a high network speed. Certainly, carrier aggregation may usually increase power consumption of the terminal, thereby reducing a use time of the terminal. If the non-important network service is performed, or a non-network-related service (namely, a non-network service) is performed, it indicates that the terminal does not necessarily need the good network condition, so carrier aggregation may not be performed.

In this embodiment of this application, optionally, before step 201, the network-side equipment may first configure a carrier aggregation parameter cell set and configure a parameter related to carrier aggregation. For example, the network-side equipment includes a base station, which may be a 4G base station (eNodeB, eNB) or a 5G base station (gNodeB, gNB), and the base station configures a plurality of cells in a logical set to form the carrier aggregation parameter cell set. Only a cell in the set is allowed for carrier aggregation.

Step 202: Report corresponding carrier aggregation association information to the network-side equipment based on a service state of the terminal, where the carrier aggregation association information indicates whether the network-side equipment configures a secondary cell of carrier aggregation for the terminal.

In this step, after obtaining the service state of the terminal, the terminal may report carrier aggregation association information corresponding to the service state of the terminal to the network-side equipment. For example, the terminal may generate corresponding carrier aggregation association information based on the obtained service state, where the carrier aggregation association information indicates whether the network-side equipment configures the secondary cell of carrier aggregation for the terminal, that is, the carrier aggregation association information is determined based on the service state of the terminal. After the terminal reports the carrier aggregation association information to the network-side equipment, the network-side equipment may determine, based on the carrier aggregation association information, whether to configure the secondary cell of carrier aggregation for the terminal.

In this embodiment of this application, optionally, the carrier aggregation association information may be independent information, or may be added to another message sent by the terminal to the network-side equipment and reported to the network-side equipment together with the another message.

Step 203: In response to a second message delivered by the network-side equipment based on the carrier aggregation association information, activate the secondary cell in a case that the network-side equipment configures the secondary cell of carrier aggregation for the terminal, and deactivate the secondary cell or maintain a closed state of carrier aggregation in a case that the network-side equipment does not configure the secondary cell of carrier aggregation for the terminal.

In this embodiment of this application, because the carrier aggregation association information indicates whether the network-side equipment configures the secondary cell of carrier aggregation for the terminal, after receiving the carrier aggregation association information, the network-side equipment may determine, based on the carrier aggregation association information, whether to configure the secondary cell of carrier aggregation for the terminal, that is, in a case that the carrier aggregation association information indicates that the network-side equipment configures the secondary cell of carrier aggregation for the terminal, the network-side equipment may configure the secondary cell of carrier aggregation for the terminal, while the network-side equipment may not configure the secondary cell of carrier aggregation for the terminal in a case that the carrier aggregation association information indicates that the network-side equipment does not configure the secondary cell of carrier aggregation for the terminal. Then the network-side equipment may deliver the second message to the terminal based on the received carrier aggregation association information.

If the terminal receives the second message delivered by the network-side equipment, the terminal may activate the secondary cell in response to the second message in a case that the network-side equipment configures the secondary cell of carrier aggregation for the terminal, to implement a carrier aggregation function by using the corresponding secondary cell and perform a related network service for a large bandwidth and a high network speed. However, in a case that the network-side equipment does not configure the secondary cell of carrier aggregation for the terminal, the secondary cell is deactivated or maintains a closed state of carrier aggregation, to reduce extra power consumption caused by carrier aggregation and reduce network resources occupied by the terminal, so that the network-side equipment may allocate saved network resources to other terminals to use, thereby improving overall adaptability of a network.

In some embodiments of this application, optionally, the secondary cell activated by the terminal should be a cell in the carrier aggregation parameter cell set pre-configured by the network-side equipment. A quantity of secondary cells activated by the terminal may be determined based on a capability supported by the terminal, a capability supported by the network-side equipment, and a specific requirement of the terminal.

In some embodiments of this application, optionally, in a case that the network-side equipment does not configure carrier aggregation for the terminal, if the terminal has established a connection with the secondary cell, that is, the terminal has been in a state of carrier aggregation, the terminal may deactivate the secondary cell to release occupied network resources, while if the terminal has not established a connection with any secondary cell, the terminal may continue to maintain the closed state of carrier aggregation, or the terminal may not perform any processing.

In this embodiment of this application, the service state of the terminal is obtained after the first message delivered by the network-side equipment is received, and the corresponding carrier aggregation association information is reported to the network-side equipment based on the service state, to indicate whether the network-side equipment configures the secondary cell of carrier aggregation for the terminal, so that carrier aggregation is configured for the terminal only when the terminal actually needs to be configured with carrier aggregation. Consequently, a problem of power consumption and network occupation caused by configuring carrier aggregation when carrier aggregation is not needed may be avoided, user experience is improved, and more network resources may be saved for other terminals to use, thereby improving overall adaptability of a network.

In some embodiments of this application, the service state includes an important network service state, a non-important network service state, and a non-network service state, and generating the carrier aggregation association information based on the service state of the terminal includes the following cases:
in a case that a current service state of the terminal is the important network service state, the carrier aggregation association information indicates that the network-side equipment configures a secondary cell of carrier aggregation for the terminal; and
in a case that the current service state of the terminal is the non-important network service state or the non-network service state, the carrier aggregation association information indicates that the network-side equipment does not configure a secondary cell of carrier aggregation for the terminal.

Specifically, in this embodiment of this application, the service state of the terminal may be divided into three types: an important network service state, a non-important network service state, and a non-network service state, where the important network service state indicates that a network service currently performed by the terminal is an important network service, that is, the terminal is currently using a network and has a high network quality requirement; the non-important network service state indicates that the network service currently performed by the terminal is a non-important (that is, unimportant) network service, that is, the terminal is currently using a network but does not have a high network quality requirement; and the non-network service state indicates that the network service currently performed by the terminal is a non-network service, that is, the terminal is not using a network at present. It may be learned that based on the service state of the terminal, it may be determined whether the terminal needs a capability of carrier aggregation, that is, whether the network-side equipment needs to configure the terminal with carrier aggregation.

In this embodiment of this application, optionally, the service state of the terminal is determined based on whether the terminal is currently using a network and a type of a network-using application when the terminal uses the network.

In some embodiments of this application, optionally, the service state of the terminal may be defined by a user, for example, the service state of the terminal is determined based on a current scenario of the terminal. For example, the service state of the terminal is defined as the important network service state in a scenario that the terminal plays a video, the service state of the terminal is defined as the non-important network service state in a scenario that the terminal displays a web-page, the service state of the terminal is defined as the non-network service state when the terminal is in a standby scenario, and the like. For another example, the service state of the terminal may be determined based on a quantity of network-using applications currently running on the terminal. For example, if the quantity of network-using applications currently running on the terminal is greater than a preset threshold, the service state of the terminal is defined as the important network service state; if the quantity of network-using applications currently running on the terminal is less than or equal to the preset threshold and is not zero, the service state of the terminal is defined as the non-important network service state; and if the quantity of network-using applications currently running on the terminal is zero, the service state of the terminal is defined as the non-network service state. Optionally, the service state of the terminal may also be determined based on an application currently running on the terminal, for example, the service state of the terminal is determined as the important network service state when a video playing application runs on the terminal, the service state of the terminal is determined as the non-important network service state when a browser application runs on the terminal, and the service state of the terminal is determined as the non-network service state when a local application that is not connected to a network runs on the terminal. Corresponding applications in different service states may be set by the user or configured before delivery. It should be noted that, it can be learned from the foregoing content that different service state classification methods may be used alternatively, or at least two of the service state classification methods may be combined to form a new service state classification method, and the service state in this embodiment of this application may be determined not only based on a type of an application that runs on the terminal.

Therefore, in this embodiment of this application, step 102 may specifically include: when it is detected that the current service state of the terminal is the important network service state, generating carrier aggregation association information to instruct the network-side equipment to configure carrier aggregation for the terminal, so that the network-side equipment configures carrier aggregation for the terminal; and when it is detected that the current service state of the terminal is the non-important network service state or the non-network service state, generating carrier aggregation association information to instruct the network-side equipment not to configure carrier aggregation for the terminal, so that the network-side equipment does not configure carrier aggregation for the terminal.

In some other embodiments of this application, the generating the carrier aggregation association information based on the service state of the terminal includes the following case:
in a case that the terminal does not re-enter the important network service state within preset duration from an end of the important network service state, the carrier aggregation association information indicates that the network-side equipment does not configure a secondary cell of carrier aggregation for the terminal.

To be specific, the terminal does not re-enter the important network service state within preset duration from the terminal ending the important network service state, or the terminal does not re-enter the important network service state after the preset duration from the terminal ending the important network service state. For example, if the terminal is in the non-important network service state or the non-network service state, it indicates that the terminal does not have a high network quality requirement, so a carrier aggregation capability does not need to be configured for the terminal, and carrier aggregation association information indicating that the network-side equipment does not need to configure carrier aggregation for the terminal may be generated. The preset duration is used to prevent frequent ping-pong handover, and the preset duration may be determined based on an actual demand.

In some embodiments of this application, the first message is an A4 event control message, and the A4 event control message is used to instruct the terminal to perform A4 event measurement;
before the reporting carrier aggregation association information to the network-side equipment, the method further includes:
in response to the received first message delivered by the network-side equipment, performing A4 event measurement, generating an A4 event measurement report, and adding the carrier aggregation association information to the A4 event measurement report; and
the reporting carrier aggregation association information to the network-side equipment includes:
   reporting an A4 event measurement report with the carrier aggregation association information to the network-side equipment.

In this embodiment, the first message delivered by the network-side equipment to the terminal is an A4 event control message, and the A4 event control message is used to instruct the terminal to perform A4 event measurement. After the terminal receives the A4 event control message delivered by the network-side equipment, the terminal performs A4 event measurement in response to the A4 event control message, obtains relevant parameters, and then generates the A4 event measurement report. The terminal may obtain the service state of the terminal, generate carrier aggregation association information based on the service state of the terminal, and then add the carrier aggregation association information to the A4 event measurement report, to upload the carrier aggregation association information together with the A4 event measurement report to the network-side equipment.

In some embodiments of this application, optionally, the carrier aggregation association information is a carrier aggregation addition indication field, such as "ca add", which may be determined based on an actual situation. For example, when the carrier aggregation association information indicates that the network-side equipment needs to configure carrier aggregation for the terminal, the carrier aggregation addition indication field is set to "1" or "true", while when the carrier aggregation association information indicates that the network-side equipment does not need to configure carrier aggregation for the terminal, the carrier aggregation addition indication field is set to "0" or "false".

In some other embodiments of this application, the first message is an A4 event control message, and the A4 event control message is used to instruct the terminal to perform A4 event measurement;
before the generating the carrier aggregation association information based on the service state, the method further includes:
performing A4 event measurement in response to the received first message delivered by the network-side equipment; and
the generating the carrier aggregation association information based on the service state, and the reporting the carrier aggregation association information to the network-side equipment includes:
   based on the service state of the terminal and a threshold of a target parameter required to meet a condition of adding carrier aggregation, adjusting a value corresponding to the target parameter in an A4 event measurement result, generating an A4 event measurement report, and reporting the A4 event measurement report to the network-side equipment, where the value corresponding to the target parameter in the A4 event measurement report indicates whether the network-side equipment configures carrier aggregation for the terminal.

In this embodiment, the first message delivered by the network-side equipment to the terminal is an A4 event control message, and the A4 event control message is used to instruct the terminal to perform A4 event measurement. After the terminal receives the A4 event control message delivered by the network-side equipment, the terminal performs A4 event measurement in response to the A4 event control message, and obtains relevant parameters. In addition, the terminal may obtain the service state of the terminal, then generate an A4 event measurement report based on the service state of the terminal and an A4 event measurement result, and then upload the A4 event measurement report to the network-side equipment.

In some embodiments of this application, optionally, when the A4 event measurement report is generated based on the service state of the terminal and the A4 event measurement result, a value of a target parameter associated with carrier aggregation in the A4 event measurement result may be modified. Whether the value of the target parameter meets a carrier aggregation configuration threshold may indicate whether the network-side equipment configures carrier aggregation for the terminal, and the threshold of the target parameter required to meet the condition of adding carrier aggregation may be pre-stored in the terminal. To be specific, in a final generated A4 event measurement report, the value of the target parameter associated with carrier aggregation indicates whether the network-side equipment configures carrier aggregation for the terminal. For example, in the reported A4 event measurement report, if the value of the target parameter associated with a carrier aggregation function does not meet the threshold of the target parameter required to meet the condition of adding carrier aggregation, it indicates that the network-side equipment does not need to configure carrier aggregation for the terminal; and in the reported A4 event measurement report, if the value of the target parameter associated with the carrier aggregation function meets the threshold of the target parameter required to meet the condition of adding carrier aggregation, it indicates that the network-side equipment needs to configure carrier aggregation for the terminal. In this case, the carrier aggregation association information is equivalent to the A4 event measurement report, and more accurately, the carrier aggregation association information is the value of the target parameter associated with carrier aggregation in the A4 event measurement report.

In some embodiments of this application, optionally, the target parameter may be reference signal receiving quality (Reference Signal Receiving Quality, RSRQ), reference signal receiving power (Reference Signal Receiving Power, RSRP), and the like.

In some embodiments of this application, optionally, the second message delivered by the network-side equipment may be an RRC message. If the network-side equipment configures carrier aggregation for the terminal, corresponding Scell (secondary cell) information may be included in the RRC message. By parsing the Scell information, the terminal may activate a corresponding secondary cell and perform a corresponding network service. If the network-side equipment does not configure carrier aggregation for the terminal, the corresponding Scell (secondary cell) information may not be included in the RRC message. In this case, if the terminal already has a configured secondary cell, the terminal may deactivate the configured secondary cell; and if the terminal is not configured with a secondary cell, the terminal may maintain a closed state of carrier aggregation without any processing.

In conclusion, in this embodiment of this application, the service state of the terminal is obtained after the first message delivered by the network-side equipment is received, and the corresponding carrier aggregation association information is reported to the network-side equipment based on the service state, to indicate whether the network-side equipment configures the secondary cell of carrier aggregation for the terminal, so that carrier aggregation is configured for the terminal only when the terminal actually needs to be configured with carrier aggregation. To be specific, carrier aggregation is configured only when the terminal is in the important network service state, to improve a network bandwidth and a network speed, while carrier aggregation is not configured when the terminal is in the non-important network service state or the non-network service state. Consequently, a problem of power consumption and network occupation caused by configuring carrier aggregation when carrier aggregation is not needed may be avoided, user experience is improved, and more network resources may be saved for other terminals to use, thereby improving overall adaptability of a network.

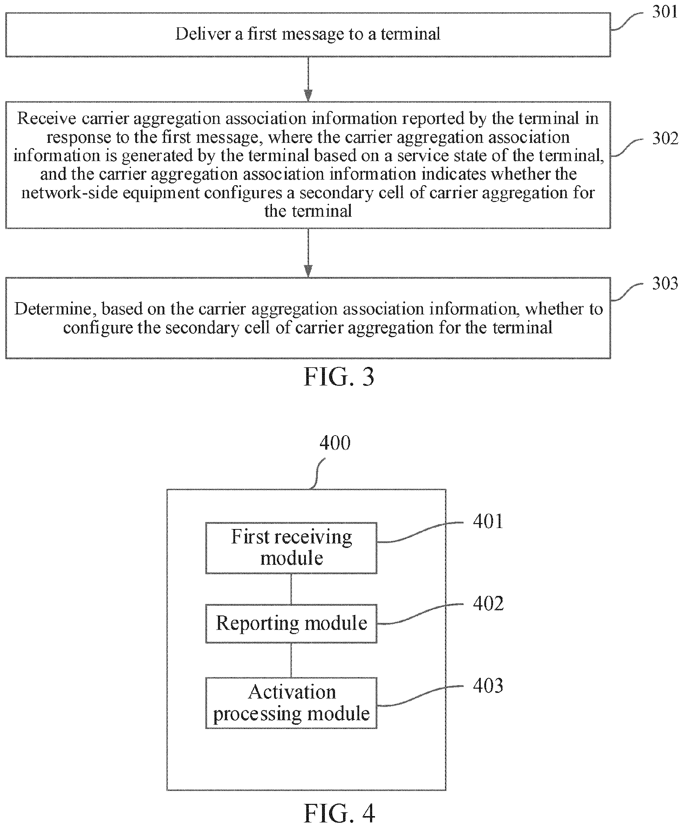

Referring to FIG. 3, FIG. 3 is a schematic flowchart of a carrier aggregation control method applied to a network-side equipment according to an embodiment of this application. As shown in FIG. 3, another embodiment of this application provides a carrier aggregation control method applied to a terminal, and the method includes the following steps.

Step 301: Deliver a first message to a terminal.

In some embodiments of this application, the first message is an A4 event control message, and the A4 event control message is used to instruct the terminal to perform A4 event measurement.

In this embodiment of this application, optionally, before step 301, the network-side equipment may first configure a carrier aggregation parameter cell set and configure a parameter related to carrier aggregation. For example, the network-side equipment includes a base station, which may be an eNodeB or a gNodeB, and the base station configures a plurality of cells in a logical set to form the carrier aggregation parameter cell set. Only a cell in the set is allowed for carrier aggregation.

Step 302: Receive carrier aggregation association information reported by the terminal in response to the first message, where the carrier aggregation association information is generated by the terminal based on a service state of the terminal, and the carrier aggregation association information indicates whether the network-side equipment configures a secondary cell of carrier aggregation for the terminal.

If the network-side equipment delivers the first message to the terminal, the terminal may obtain the service state of the terminal in response to the first message. After obtaining the service state of the terminal, the terminal may generate carrier aggregation association information based on the obtained service state. The carrier aggregation association information indicates whether the network-side equipment needs to configure carrier aggregation for the terminal, that is, the carrier aggregation association information is determined based on the service state of the terminal. After the terminal reports the carrier aggregation association information to the network-side equipment, the network-side equipment may determine, based on the carrier aggregation association information, whether to configure carrier aggregation for the terminal.

In this embodiment, the service state of the terminal may represent a type and importance of the service currently performed by the terminal, for example, whether the service currently performed is a network service or a non-network service, and whether the network service currently performed is an important network service or a non-important network service. Consequently, it may be determined based on the service state of the terminal whether the terminal needs a carrier aggregation function in this case. For example, when the important network service is performed, if the terminal needs to ensure a good network condition, carrier aggregation needs to be performed to provide a large bandwidth and a high network speed. Certainly, carrier aggregation may usually increase power consumption of the terminal, thereby reducing a use time of the terminal. If the non-important network service is performed, or a non-network-related service (namely, a non-network service) is performed, it indicates that the terminal does not necessarily need the good network condition, so carrier aggregation may not be performed.

In this embodiment of this application, optionally, the carrier aggregation association information may be independent information, or may be added to another message sent by the terminal to the network-side equipment and reported to the network-side equipment together with the another message.

Step 303: Determine, based on the carrier aggregation association information, whether to configure the secondary cell of carrier aggregation for the terminal.

In this embodiment of this application, because the carrier aggregation association information indicates whether the network-side equipment needs to configure carrier aggregation for the terminal, after receiving the carrier aggregation association information, the network-side equipment may determine, based on the carrier aggregation association information, whether to configure carrier aggregation for the terminal, that is, in a case that the carrier aggregation association information indicates that the network-side equipment configures carrier aggregation for the terminal, the network-side equipment may configure carrier aggregation for the terminal, while the network-side equipment may not configure carrier aggregation for the terminal in a case that the carrier aggregation association information indicates that the network-side equipment does not configure carrier aggregation for the terminal. Then the network-side equipment may deliver the second message to the terminal based on the received carrier aggregation association information.

In this embodiment of this application, it is determined, by receiving the carrier aggregation association information that is generated based on the service state of the terminal and that is reported by the terminal, whether the terminal needs to be configured with the secondary cell of carrier aggregation, so that carrier aggregation is configured for the terminal only when the terminal actually needs to be configured with carrier aggregation. Consequently, a problem of power consumption and network occupation caused by configuring carrier aggregation when carrier aggregation is not needed may be avoided, user experience is improved, and more network resources may be saved for other terminals to use, thereby improving overall adaptability of a network.

In some embodiments of this application, the service state of the terminal includes an important network service state, a non-important network service state, and a non-network service state;
in a case that a current service state of the terminal is the important network service state, the carrier aggregation association information indicates that the network-side equipment needs to configure carrier aggregation for the terminal; and
in a case that the current service state of the terminal is the non-important network service state or the non-network service state, the carrier aggregation association information indicates that the network-side equipment does not need to configure carrier aggregation for the terminal.

In some other embodiments of this application, in a case that the terminal does not re-enter the important network service state within preset duration from the terminal ending the important network service state, the carrier aggregation association information indicates that the network-side equipment does not need to configure carrier aggregation for the terminal.

In some embodiments of this application, the first message is an A4 event control message, and the A4 event control message is used to instruct the terminal to perform A4 event measurement; and
the receiving carrier aggregation association information reported by the terminal in response to the first message includes:
receiving an A4 event measurement report reported by the terminal, where the carrier aggregation association information is added to the A4 event measurement report.

In this embodiment, the first message delivered by the network-side equipment to the terminal is an A4 event control message, and the A4 event control message is used to instruct the terminal to perform A4 event measurement. After the terminal receives the A4 event control message delivered by the network-side equipment, the terminal performs A4 event measurement in response to the A4 event control message, obtains relevant parameters, and then generates the A4 event measurement report. The terminal may obtain the service state of the terminal, generate carrier aggregation association information based on the service state of the terminal, and then add the carrier aggregation association information to the A4 event measurement report, to upload the carrier aggregation association information together with the A4 event measurement report to the network-side equipment.

In some embodiments of this application, optionally, the carrier aggregation association information is a carrier aggregation addition indication field, such as "ca add", which may be determined based on an actual situation. For example, when the carrier aggregation association information indicates that the network-side equipment needs to configure carrier aggregation for the terminal, the carrier aggregation addition indication field is set to "1" or "true", while when the carrier aggregation association information indicates that the network-side equipment does not need to configure carrier aggregation for the terminal, the carrier aggregation addition indication field is set to "0" or "false".

In some other embodiments of this application, the first message is an A4 event control message, and the A4 event control message is used to instruct the terminal to perform A4 event measurement;
the receiving carrier aggregation association information reported by the terminal in response to the first message includes:
receiving an A4 event measurement report reported by the terminal; and
the determining, based on the carrier aggregation association information, whether to configure the secondary cell of carrier aggregation for the terminal includes:
   comparing a value corresponding to a target parameter in the A4 event measurement report with a threshold of a target parameter required to meet a condition of adding carrier aggregation, and configuring the secondary cell of carrier aggregation for the terminal in a case that the value corresponding to the target parameter in the A4 event measurement report meets the condition of adding carrier aggregation, or not configuring the secondary cell of carrier aggregation for the terminal in a case that the value corresponding to the target parameter in the A4 event measurement report does not meet the condition of adding carrier aggregation.

In this embodiment, the first message delivered by the network-side equipment to the terminal is an A4 event control message, and the A4 event control message is used to instruct the terminal to perform A4 event measurement. After the terminal receives the A4 event control message delivered by the network-side equipment, the terminal performs A4 event measurement in response to the A4 event control message, and obtains relevant parameters. In addition, the terminal may obtain the service state of the terminal, then generate an A4 event measurement report based on the service state of the terminal and an A4 event measurement result, and then upload the A4 event measurement report to the network-side equipment.

In this embodiment, the first message delivered by the network-side equipment to the terminal is an A4 event control message, and the A4 event control message is used to instruct the terminal to perform A4 event measurement. After the terminal receives the A4 event control message delivered by the network-side equipment, the terminal performs A4 event measurement in response to the A4 event control message, and obtains relevant parameters. In addition, the terminal may obtain the service state of the terminal, then generate an A4 event measurement report based on the service state of the terminal and an A4 event measurement result, and then upload the A4 event measurement report to the network-side equipment.

In some embodiments of this application, optionally, when the A4 event measurement report is generated based on the service state of the terminal and the A4 event measurement result, a value of a target parameter associated with carrier aggregation in the A4 event measurement result may be modified, and whether the value of the target parameter meets a carrier aggregation configuration threshold may indicate whether the network-side equipment needs to configure carrier aggregation for the terminal. To be specific, in a final generated A4 event measurement report, the value of the target parameter associated with carrier aggregation indicates whether the network-side equipment needs to configure carrier aggregation for the terminal. Therefore, the value corresponding to the target parameter in the A4 event measurement report is compared with a threshold of a target parameter required to meet a condition of adding carrier aggregation. In the reported A4 event measurement report, if the value of the target parameter associated with a carrier aggregation function does not meet the carrier aggregation configuration threshold, it indicates that the network-side equipment does not configure carrier aggregation for the terminal; and in the reported A4 event measurement report, if the value of the target parameter associated with the carrier aggregation function meets the carrier aggregation configuration threshold, it indicates that the network-side equipment configures carrier aggregation for the terminal. In this case, the carrier aggregation association information is equivalent to the A4 event measurement report, and more accurately, the carrier aggregation association information is the value of the target parameter associated with carrier aggregation in the A4 event measurement report.

In some embodiments of this application, optionally, the target parameter may be reference signal receiving quality (Reference Signal Receiving Quality, RSRQ), reference signal receiving power (Reference Signal Receiving Power, RSRP), and the like.

In this embodiment of this application, after receiving the carrier aggregation association information reported by the terminal, the network-side equipment may deliver the second message to the terminal. In a case that the carrier aggregation association information indicates that the network-side equipment needs to configure carrier aggregation for the terminal, a second message that includes secondary cell configuration information may be delivered to the terminal, so that the terminal may add a related configuration of carrier aggregation after receiving the second message. In a case that the carrier aggregation association information indicates that the network-side equipment does not need to configure carrier aggregation for the terminal, a second message that does not include the secondary cell configuration information may be delivered to the terminal, so that the terminal may deactivate the secondary cell or maintain a closed state of carrier aggregation after receiving the second message.

In some embodiments of this application, optionally, the second message delivered by the network-side equipment may be an RRC message. If the network-side equipment configures carrier aggregation for the terminal, corresponding Scell (secondary cell) information may be included in the RRC message. By parsing the Scell information, the terminal may activate a corresponding secondary cell and perform a corresponding network service. If the network-side equipment does not configure carrier aggregation for the terminal, the corresponding Scell (secondary cell) information may not be included in the RRC message. In this case, if the terminal already has a configured secondary cell, the terminal may deactivate the configured secondary cell; and if the terminal is not configured with a secondary cell, the terminal may maintain a closed state of carrier aggregation without any processing.

This embodiment of this application corresponds to the terminal embodiment, and reference may be made to each other.

In this embodiment of this application, it is determined, by receiving the carrier aggregation association information that is generated based on the service state of the terminal and that is reported by the terminal, whether the terminal needs to be configured with carrier aggregation, so that carrier aggregation is configured for the terminal only when the terminal actually needs to be configured with carrier aggregation. Consequently, a problem of power consumption and network occupation caused by configuring carrier aggregation when carrier aggregation is not needed may be avoided, user experience is improved, and more network resources may be saved for other terminals to use, thereby improving overall adaptability of a network.

The carrier aggregation control method that is applied to a terminal provided in this embodiment of this application may be executed by a carrier aggregation control apparatus. In this embodiment of this application, that the carrier aggregation control apparatus performs the carrier aggregation control method is used as an example to describe the carrier aggregation control apparatus provided in this embodiment of this application.

Referring to FIG. 4, FIG. 4 is a schematic diagram of a structure of a carrier aggregation control apparatus applied to a terminal according to an embodiment of this application. As shown in FIG. 4, an embodiment of this application further provides a carrier aggregation control apparatus applied to a terminal, and the apparatus 400 includes:
a first receiving module 401, configured to receive a first message delivered by a network-side equipment;
a reporting module 402, configured to report corresponding carrier aggregation association information to the network-side equipment based on a service state of the terminal, where the carrier aggregation association information indicates whether the network-side equipment configures a secondary cell of carrier aggregation for the terminal; and
an activation processing module 403, configured to: in response to a second message delivered by the network-side equipment based on the carrier aggregation association information, activate the secondary cell in a case that the network-side equipment configures the secondary cell of carrier aggregation for the terminal, and deactivate the secondary cell or maintain a closed state of carrier aggregation in a case that the network-side equipment does not configure the secondary cell of carrier aggregation for the terminal.

In this embodiment of this application, the service state of the terminal is obtained, carrier aggregation association information is generated based on the service state, and the carrier aggregation association information is reported to the network-side equipment, to indicate whether the network-side equipment needs to configure the secondary cell of carrier aggregation for the terminal, so that carrier aggregation is configured for the terminal only when the terminal actually needs to be configured with carrier aggregation. Consequently, a problem of power consumption and network occupation caused by configuring carrier aggregation when carrier aggregation is not needed may be avoided, user experience is improved, and more network resources may be saved for other terminals to use, thereby improving overall adaptability of a network.

Optionally, the service state includes an important network service state, a non-important network service state, and a non-network service state, and the reporting module includes:
a first generating unit, configured to: in a case that a current service state of the terminal is the important network service state, the carrier aggregation association information indicates that the network-side equipment configures a secondary cell of carrier aggregation for the terminal; and
a second generating unit, configured to: in a case that the current service state of the terminal is the non-important network service state or the non-network service state, the carrier aggregation association information indicates that the network-side equipment does not configure a secondary cell of carrier aggregation for the terminal.

Optionally, the reporting module includes:
a third generating unit, configured to: in a case that the terminal does not re-enter the important network service state within preset duration from an end of the important network service state, the carrier aggregation association information indicates that the network-side equipment does not configure a secondary cell of carrier aggregation for the terminal.

Optionally, the first message is an A4 event control message, and the A4 event control message is used to instruct the terminal to perform A4 event measurement;
the apparatus further includes:
an A4 event module, configured to: in response to the received first message delivered by the network-side equipment, perform A4 event measurement, generate an A4 event measurement report, and add the carrier aggregation association information to the A4 event measurement report; and
the reporting module includes:
   a reporting unit, configured to report an A4 event measurement report with the carrier aggregation association information to the network-side equipment.

Optionally, the first message is an A4 event control message, and the A4 event control message is used to instruct the terminal to perform A4 event measurement;
the apparatus further includes:
an execution module, configured to perform A4 event measurement in response to the received first message delivered by the network-side equipment; and
the reporting module includes:
   an A4 event unit, configured to: based on the service state of the terminal and a threshold of a target parameter required to meet a condition of adding carrier aggregation, adjust a value corresponding to the target parameter in an A4 event measurement result, generate an A4 event measurement report, and report the A4 event measurement report to the network-side equipment, where the value corresponding to the target parameter in the A4 event measurement report indicates whether the network-side equipment configures carrier aggregation for the terminal.

The carrier aggregation control apparatus in this embodiment of this application may be an electronic device, for example, an electronic device with an operating system, or may be a component in the electronic device, for example, an integrated circuit or a chip. The electronic device may be a terminal, or another device other than the terminal. For example, the terminal may include but is not limited to the foregoing listed types of the terminal 11. The another device may be a server, a network attached storage (Network Attached Storage, NAS), and the like. This is not specifically limited in this embodiment of this application.

The carrier aggregation control apparatus provided in this embodiment of this application can implement the processes implemented in the method embodiment of FIG. 2, and a same technical effect can be achieved. To avoid repetition, details are not described herein again.

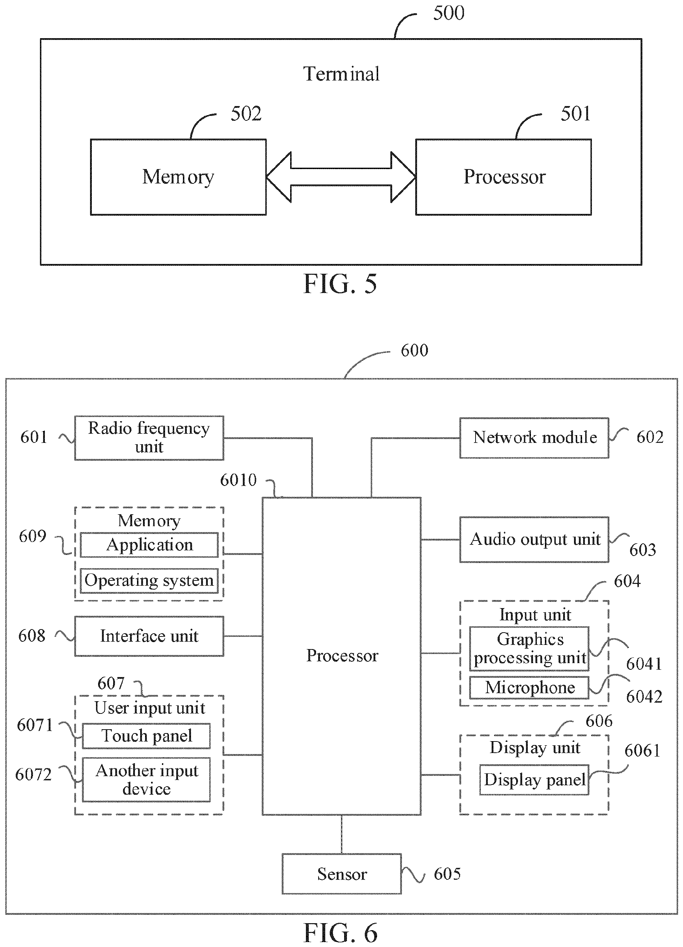

Optionally, as shown in FIG. 5, an embodiment of this application further provides a terminal 500, including a processor 501 and a memory 502, and the memory 502 stores a program or instructions that can be run on the processor 501. When the program or the instructions are executed by the processor 501, the steps of the carrier aggregation control method are implemented, and a same technical effect can be achieved. To avoid repetition, details are not described herein again.

FIG. 6 is a schematic diagram of a hardware structure of a terminal according to an embodiment of this application.

The terminal 600 includes but is not limited to: components such as a radio frequency unit 601, a network module 602, an audio output unit 603, an input unit 604, a sensor 605, a display unit 606, a user input unit 607, an interface unit 608, a memory 609, and a processor 6010.

A person skilled in the art may understand that the terminal 600 may further include a power supply (such as a battery) that supplies power to each component. The power supply may be logically connected to the processor 6010 through a power management system, to implement functions such as charging and discharging management, and power consumption management by using the power management system. The terminal structure shown in FIG. 6 constitutes no limitation on the terminal, and the terminal may include more or fewer components than those shown in the figure, or combine some components, or have different component arrangements. Details are not described herein.

The radio frequency unit 601 is configured to receive a first message delivered by a network-side equipment;
the radio frequency unit 601 is configured to report corresponding carrier aggregation association information to the network-side equipment based on a service state of the terminal, where the carrier aggregation association information indicates whether the network-side equipment configures a secondary cell of carrier aggregation for the terminal; and
the processor 6010 is further configured to: in response to a second message delivered by the network-side equipment based on the carrier aggregation association information, activate the secondary cell in a case that the network-side equipment configures the secondary cell of carrier aggregation for the terminal, and deactivate the secondary cell or maintain a closed state of carrier aggregation in a case that the network-side equipment does not configure the secondary cell of carrier aggregation for the terminal.

In this embodiment of this application, the service state of the terminal is obtained, carrier aggregation association information is generated based on the service state, and the carrier aggregation association information is reported to the network-side equipment, to indicate whether the network-side equipment configures the secondary cell of carrier aggregation for the terminal, so that the secondary cell of carrier aggregation is configured for the terminal only when the terminal actually needs to be configured with carrier aggregation. Consequently, a problem of power consumption and network occupation caused by configuring carrier aggregation when carrier aggregation is not needed may be avoided, user experience is improved, and more network resources may be saved for other terminals to use, thereby improving overall adaptability of a network.

Optionally, the service state includes an important network service state, a non-important network service state, and a non-network service state, and in a case that a current service state of the terminal is the important network service state, carrier aggregation association information indicating that the network-side equipment needs to configure carrier aggregation for the terminal is generated;
in a case that a current service state of the terminal is the important network service state, the carrier aggregation association information indicates that the network-side equipment configures a secondary cell of carrier aggregation for the terminal; and
in a case that the current service state of the terminal is the non-important network service state or the non-network service state, the carrier aggregation association information indicates that the network-side equipment does not configure a secondary cell of carrier aggregation for the terminal.

Optionally, in a case that the terminal does not re-enter the important network service state within preset duration from an end of the important network service state, the carrier aggregation association information indicates that the network-side equipment does not configure a secondary cell of carrier aggregation for the terminal.

Optionally, the first message is an A4 event control message, and the A4 event control message is used to instruct the terminal to perform A4 event measurement;
the processor 6010 is further configured to: in response to the received first message delivered by the network-side equipment, perform A4 event measurement, generate an A4 event measurement report, and add the carrier aggregation association information to the A4 event measurement report; and
the radio frequency unit 601 is further configured to report an A4 event measurement report with the carrier aggregation association information to the network-side equipment.

Optionally, the first message is an A4 event control message, and the A4 event control message is used to instruct the terminal to perform A4 event measurement;
the processor 6010 is further configured to: based on the service state of the terminal and a threshold of a target parameter required to meet a condition of adding carrier aggregation, adjust a value corresponding to the target parameter in an A4 event measurement result, and generate an A4 event measurement report, where the value corresponding to the target parameter in the A4 event measurement report indicates whether the network-side equipment configures carrier aggregation for the terminal; and
the radio frequency unit 601 is further configured to report the A4 event measurement report to the network-side equipment.

It should be understood that, in this embodiment of this application, the input unit 604 may include a graphics processing unit (Graphics Processing Unit, GPU) 6041 and a microphone 6042, and the graphics processing unit 6041 processes image data of a still picture or a video obtained by an image capture apparatus (such as a camera) in a video capture mode or an image capture mode. The display unit 606 may include a display panel 6061, and the display panel 6061 may be configured in a form of a liquid crystal display, an organic light-emitting diode, or the like. The user input unit 607 includes at least one of a touch panel 6071 and another input device 6072. The touch panel 6071 is also referred to as a touchscreen. The touch panel 6071 may include two parts: a touch detection apparatus and a touch controller. The another input device 6072 may include but is not limited to a physical keyboard, a functional button (such as a volume control button or a power on/off button), a trackball, a mouse, and a joystick. Details are not described herein.

The memory 609 may be configured to store a software program and various data. The memory 609 may mainly include a first storage area for storing a program or an instruction and a second storage area for storing data. The first storage area may store an operating system, and an application or an instruction required by at least one function (for example, a sound playing function or an image playing function). In addition, the memory 609 may be a volatile memory or a non-volatile memory, or the memory 609 may include a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synch link dynamic random access memory (Synch link DRAM, SLDRAM), and a direct rambus random access memory (Direct Rambus RAM, DRRAM). The memory 609 in this embodiment of this application includes but is not limited to these memories and any memory of another proper type.

The processor 6010 may include one or more processing units. Optionally, an application processor and a modem processor are integrated into the processor 6010. The application processor mainly processes an operating system, a user interface, an application, or the like. The modem processor mainly processes a wireless communication signal, for example, a baseband processor. It can be understood that the foregoing modem processor may not be integrated into the processor 6010.

The carrier aggregation control method that is applied to a network-side equipment provided in this embodiment of this application may be executed by a carrier aggregation control apparatus. In this embodiment of this application, that the carrier aggregation control apparatus performs the carrier aggregation control method is used as an example to describe the carrier aggregation control apparatus provided in this embodiment of this application.

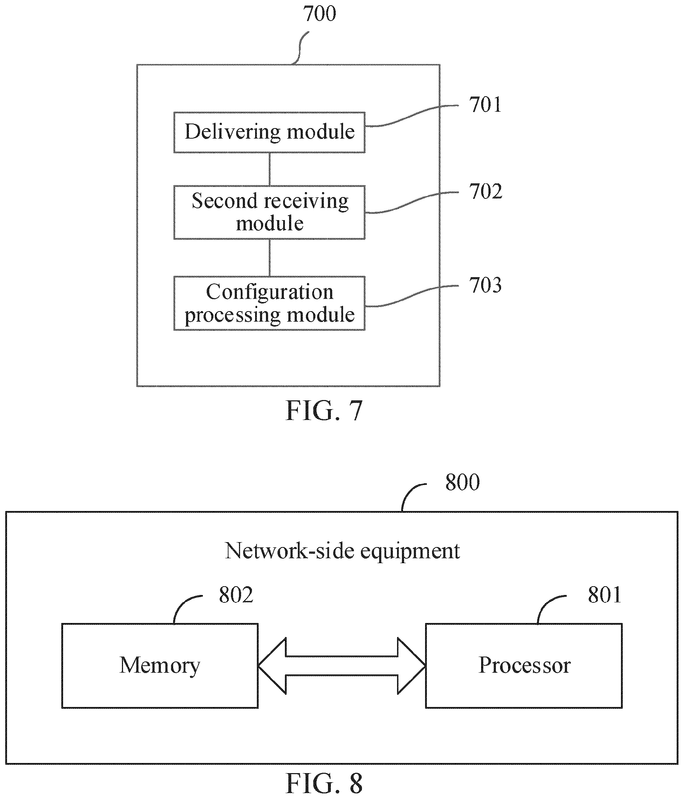

Referring to FIG. 7, FIG. 7 is a schematic diagram of a structure of a carrier aggregation control apparatus applied to a network-side equipment according to an embodiment of this application. As shown in FIG. 7, an embodiment of this application further provides a carrier aggregation control apparatus applied to a network-side equipment, and the apparatus 700 includes:
a delivering module 701, configured to deliver a first message to a terminal;
a second receiving module 702, configured to receive carrier aggregation association information reported by the terminal in response to the first message, where the carrier aggregation association information is generated by the terminal based on a service state of the terminal, and the carrier aggregation association information indicates whether the network-side equipment configures a secondary cell of carrier aggregation for the terminal; and
a configuration processing module 703, configured to determine, based on the carrier aggregation association information, whether to configure the secondary cell of carrier aggregation for the terminal.

In this embodiment of this application, it is determined, by receiving the carrier aggregation association information that is generated based on the service state of the terminal and that is reported by the terminal, whether the terminal needs to be configured with the secondary cell of carrier aggregation, so that carrier aggregation is configured for the terminal only when the terminal actually needs to be configured with carrier aggregation. Consequently, a problem of power consumption and network occupation caused by configuring carrier aggregation when carrier aggregation is not needed may be avoided, user experience is improved, and more network resources may be saved for other terminals to use, thereby improving overall adaptability of a network.

Optionally, the first message is an A4 event control message, and the A4 event control message is used to instruct the terminal to perform A4 event measurement; and
the second receiving module includes:
a first receiving unit, configured to receive an A4 event measurement report reported by the terminal, where the carrier aggregation association information is added to the A4 event measurement report.

Optionally, the first message is an A4 event control message, and the A4 event control message is used to instruct the terminal to perform A4 event measurement;
the second receiving module includes:
a second receiving unit, configured to receive an A4 event measurement report reported by the terminal; and
the configuration processing module includes:
   a configuration processing unit, configured to: compare a value corresponding to a target parameter in the A4 event measurement report with a threshold of a target parameter required to meet a condition of adding carrier aggregation, and configure the secondary cell of carrier aggregation for the terminal in a case that the value corresponding to the target parameter in the A4 event measurement report meets the condition of adding carrier aggregation, or not configure the secondary cell of carrier aggregation for the terminal in a case that the value corresponding to the target parameter in the A4 event measurement report does not meet the condition of adding carrier aggregation.

The network-side equipment in this embodiment of this application may include but is not limited to the types of network-side equipments 12 listed above. This is not specifically limited in this embodiment of this application.

The carrier aggregation control apparatus provided in this embodiment of this application can implement the processes implemented in the method embodiment of FIG. 3, and a same technical effect can be achieved. To avoid repetition, details are not described herein again.

Optionally, as shown in FIG. 8, an embodiment of this application further provides a network-side equipment 800, including a processor 801 and a memory 802, and the memory 802 stores a program or instructions that can be run on the processor 801. When the program or the instructions are executed by the processor 801, the steps of the carrier aggregation control method are implemented, and a same technical effect can be achieved. To avoid repetition, details are not described herein again.

An embodiment of this application further provides a readable storage medium. The readable storage medium stores a program or instructions, and when the program or the instructions are executed by a processor, the processes of the foregoing carrier aggregation control method embodiment are implemented, and a same technical effect can be achieved. To avoid repetition, details are not described herein again.

The processor is a processor in the terminal in the foregoing embodiments. The readable storage medium includes a computer-readable storage medium, such as a computer read-only memory, a random access memory, a magnetic disk, or an optical disc.

An embodiment of this application further provides a chip. The chip includes a processor and a communications interface, the communications interface is coupled to the processor, and the processor is configured to run a program or an instruction to implement the processes of the carrier aggregation control method embodiment, and a same technical effect can be achieved. To avoid repetition, details are not described herein again.

It should be understood that the chip mentioned in this embodiment of this application may alternatively be referred to as a system-level chip, a system chip, a chip system, or a system on chip.

An embodiment of this application provides a computer program product. The program product is stored in a storage medium. The program product is executed by at least one processor to implement the processes of the foregoing carrier aggregation control method embodiment, and a same technical effect can be achieved. To avoid repetition, details are not described herein again.

It should be noted that, in this specification, the term "include", "comprise", or any other variant thereof is intended to cover a non-exclusive inclusion, so that a process, a method, an article, or an apparatus that includes a list of elements not only includes those elements but also includes other elements which are not expressly listed, or further includes elements inherent to such process, method, article, or apparatus. In absence of more constraints, an element preceded by a statement "includes a..." does not preclude the presence of additional identical elements in the process, method, article, or apparatus that includes the element. In addition, it should be noted that the scope of the methods and apparatuses in the embodiments of this application is not limited to performing functions in the order shown or discussed, but may also include performing the functions in a basically simultaneous manner or in opposite order based on the functions involved. For example, the described methods may be performed in a different order from the described order, and various steps may be added, omitted, or combined. In addition, features described with reference to some examples may be combined in other examples.

Based on the descriptions of the foregoing implementations, a person skilled in the art may clearly understand that the method in the foregoing embodiment may be implemented by software in addition to a necessary universal hardware platform or by hardware only. In most circumstances, the former is a preferred implementation. Based on such an understanding, the technical solutions of this application essentially or the part contributing to the related art may be implemented in a form of a computer software product. The computer software product is stored in a storage medium (such as a ROM/RAM, a hard disk, or an optical disc), and includes several instructions for instructing a terminal (which may be a mobile phone, a computer, a server, a network device, or the like) to perform the methods described in the embodiments of this application.

The embodiments of this application are described above with reference to the accompanying drawings, but this application is not limited to the above specific implementations, and the above specific implementations are only illustrative and not restrictive. Under the enlightenment of this application, those of ordinary skill in the art can make many forms without departing from the purpose of this application and the protection scope of the claims, all of which fall within the protection of this application.

## Claims

1. A carrier aggregation control method, applied to a terminal, wherein the method comprises:
receiving a first message delivered by a network-side equipment;
reporting corresponding carrier aggregation association information to the network-side equipment based on a service state of the terminal, wherein the carrier aggregation association information indicates whether the network-side equipment configures a secondary cell of carrier aggregation for the terminal; and
in response to a second message delivered by the network-side equipment based on the carrier aggregation association information, activating the secondary cell in a case that the network-side equipment configures the secondary cell of carrier aggregation for the terminal, and deactivating the secondary cell or maintaining a closed state of carrier aggregation in a case that the network-side equipment does not configure the secondary cell of carrier aggregation for the terminal.

2. The method according to claim 1, wherein the service state comprises an important network service state, a non-important network service state, and a non-network service state, and generating the carrier aggregation association information based on the service state of the terminal comprises the following cases:
in a case that a current service state of the terminal is the important network service state, the carrier aggregation association information indicates that the network-side equipment configures a secondary cell of carrier aggregation for the terminal; and
in a case that the current service state of the terminal is the non-important network service state or the non-network service state, the carrier aggregation association information indicates that the network-side equipment does not configure a secondary cell of carrier aggregation for the terminal.

3. The method according to claim 2, wherein the generating the carrier aggregation association information based on the service state of the terminal comprises the following case:
in a case that the terminal does not re-enter the important network service state within preset duration from an end of the important network service state, the carrier aggregation association information indicates that the network-side equipment does not configure a secondary cell of carrier aggregation for the terminal.

4. The method according to claim 1, wherein the first message is an A4 event control message, and the A4 event control message is used to instruct the terminal to perform A4 event measurement;
before the reporting carrier aggregation association information to the network-side equipment, the method further comprises:
in response to the received first message delivered by the network-side equipment, performing A4 event measurement, generating an A4 event measurement report, and adding the carrier aggregation association information to the A4 event measurement report; and
the reporting carrier aggregation association information to the network-side equipment comprises:
reporting an A4 event measurement report with the carrier aggregation association information to the network-side equipment.

5. The method according to claim 1, wherein the first message is an A4 event control message, and the A4 event control message is used to instruct the terminal to perform A4 event measurement;
before the generating the carrier aggregation association information based on the service state, the method further comprises:
performing A4 event measurement in response to the received first message delivered by the network-side equipment; and
the generating the carrier aggregation association information based on the service state, and the reporting the carrier aggregation association information to the network-side equipment comprises:
based on the service state of the terminal and a threshold of a target parameter required to meet a condition of adding carrier aggregation, adjusting a value corresponding to the target parameter in an A4 event measurement result, generating an A4 event measurement report, and reporting the A4 event measurement report to the network-side equipment, wherein the value corresponding to the target parameter in the A4 event measurement report indicates whether the network-side equipment configures carrier aggregation for the terminal.

6. A carrier aggregation control method, applied to a network-side equipment, wherein the method comprises:
delivering a first message to a terminal;
receiving carrier aggregation association information reported by the terminal in response to the first message, wherein the carrier aggregation association information is generated by the terminal based on a service state of the terminal, and the carrier aggregation association information indicates whether the network-side equipment configures a secondary cell of carrier aggregation for the terminal; and
determining, based on the carrier aggregation association information, whether to configure the secondary cell of carrier aggregation for the terminal.

7. The method according to claim 6, wherein the first message is an A4 event control message, and the A4 event control message is used to instruct the terminal to perform A4 event measurement; and
the receiving carrier aggregation association information reported by the terminal in response to the first message comprises:
receiving an A4 event measurement report reported by the terminal, wherein the carrier aggregation association information is added to the A4 event measurement report.

8. The method according to claim 6, wherein the first message is an A4 event control message, and the A4 event control message is used to instruct the terminal to perform A4 event measurement;
the receiving carrier aggregation association information reported by the terminal in response to the first message comprises:
receiving an A4 event measurement report reported by the terminal; and
the determining, based on the carrier aggregation association information, whether to configure the secondary cell of carrier aggregation for the terminal comprises:
comparing a value corresponding to a target parameter in the A4 event measurement report with a threshold of a target parameter required to meet a condition of adding carrier aggregation, and configuring the secondary cell of carrier aggregation for the terminal in a case that the value corresponding to the target parameter in the A4 event measurement report meets the condition of adding carrier aggregation, or not configuring the secondary cell of carrier aggregation for the terminal in a case that the value corresponding to the target parameter in the A4 event measurement report does not meet the condition of adding carrier aggregation.

9. A carrier aggregation control apparatus, applied to a terminal, wherein the apparatus comprises:
a first receiving module, configured to receive a first message delivered by a network-side equipment;
a reporting module, configured to report corresponding carrier aggregation association information to the network-side equipment based on a service state of the terminal, wherein the carrier aggregation association information indicates whether the network-side equipment configures a secondary cell of carrier aggregation for the terminal; and
an activation processing module, configured to: in response to a second message delivered by the network-side equipment based on the carrier aggregation association information, activate the secondary cell in a case that the network-side equipment configures the secondary cell of carrier aggregation for the terminal, and deactivate the secondary cell or maintain a closed state of carrier aggregation in a case that the network-side equipment does not configure the secondary cell of carrier aggregation for the terminal.

10. A carrier aggregation control apparatus, applied to a network-side equipment, wherein the apparatus comprises:
a delivering module, configured to deliver a first message to a terminal;
a second receiving module, configured to receive carrier aggregation association information reported by the terminal in response to the first message, wherein the carrier aggregation association information is generated by the terminal based on a service state of the terminal, and the carrier aggregation association information indicates whether the network-side equipment configures a secondary cell of carrier aggregation for the terminal; and
a configuration processing module, configured to determine, based on the carrier aggregation association information, whether to configure the secondary cell of carrier aggregation for the terminal.

11. A terminal, comprising a processor and a memory, wherein the memory stores a program or instructions executable on the processor, and the program or the instructions are executed by the processor to implement the steps of the carrier aggregation control method according to any one of claims 1 to 5.

12. A network-side equipment, comprising a processor and a memory, wherein the memory stores a program or instructions executable on the processor, and the program or the instructions are executed by the processor to implement the steps of the carrier aggregation control method according to any one of claims 6 to 8.

13. A readable storage medium, wherein the readable storage medium stores a program or instructions, and the program or the instructions are executed by the processor to implement the steps of the carrier aggregation control method according to any one of claims 1 to 5, or implement the steps of the carrier aggregation control method according to any one of claims 6 to 8.

14. A chip, wherein the chip comprises a processor and a communications interface, the communications interface is coupled to the processor, and the processor is configured to run a program or instructions, to implement the steps of the carrier aggregation control method according to any one of claims 1 to 5, or implement the steps of the carrier aggregation control method according to any one of claims 6 to 8.

15. A computer program product, stored in a storage medium, wherein the program product is executed by at least one processor to implement the steps of the carrier aggregation control method according to any one of claims 1 to 5, or the program product is executed by at least one processor to implement the steps of the carrier aggregation control method according to any one of claims 6 to 8.
